# EUROPÄISCHE PATENTSCHRIFT

(11) **EP 3 990 811 B1**
(45) Veröffentlichungstag und Bekanntmachung des Hinweises auf die Patenterteilung: **12.08.2026**
(21) Anmeldenummer: 19734748.7
(22) Anmeldetag: 26.06.2019
(51) Int. Cl.: F16K 1/36, F01P 7/14, F16K 31/06, F16K 39/02

(54) **KÜHLMITTELVENTIL FÜR EIN KRAFTFAHRZEUG**
COOLANT VALVE FOR A MOTOR VEHICLE
SOUPAPE DE LIQUIDE DE REFROIDISSEMENT CONÇUE POUR UN VÉHICULE AUTOMOBILE

(43) Veröffentlichungstag der Anmeldung: 04.05.2022
(73) Patentinhaber: Pierburg GmbH, 41460 Neuss (DE)
(72) Erfinder: SADIKU, Besart, 41460 Neuss (DE); NIEBORG, Dominik, 41460 Neuss (DE)
(74) Vertreter: Eisenführ Speiser
(86) Internationale Anmeldenummer: PCT/EP2019/067033
(87) Internationale Veröffentlichungsnummer: WO 2020/259825

(56) Entgegenhaltungen:
- EP-A2- 2 405 167
- WO-A1-2018/114644
- WO-A2-2009/108533
- DE-A1- 102015 101 477
- DE-B- 1 200 324
- KR-B1- 101 944 990
- US-A1- 2007 051 105
- US-A1- 2010 206 388

## Beschreibung

Die Erfindung betrifft ein Kühlmittelventil für ein Kraftfahrzeug mit einem Gehäuse, das einen axialen Einlass und einen radialen Auslass aufweist, einem Durchströmungsquerschnitt, der zwischen dem Einlass und dem Auslass ausgebildet ist und von einem Ventilsitz umgeben ist, einem Regelkörper, der mittels eines Aktors auf den Ventilsitz absetzbar und vom Ventilsitz abhebbar ist und Durchgangsbohrungen im Regelkörper, über die der Einlass stetig mit einem Raum an der dem Einlass abgewandten Seite des Regelkörpers verbunden ist.

Es sind insbesondere bei Anwendungen im gasführenden Bereich druckausgeglichene Ventile bekannt, bei denen durch den Druckausgleich insbesondere die Schaltzeiten deutlich verringert werden können. Zu nennen sind hier beispielsweise Schubumluftventile für Turbolader in Kraftfahrzeugen. Ein solches Schubumluftventil wird beispielsweise in der DE 10 2012 010 140 A1 beschrieben. Hierbei dienen im geschlossenen Zustand des Ventils die Durchgangsbohrungen im Regelkörper dem Druckausgleich zwischen der dem Ventilsitz zugewandten und der dem Ventilsitz abgewandten Seite des Regelkörpers. Auf diese Weise wird ein ungewolltes Öffnen des Ventils im Falle eines erhöhten Totaldrucks im Einlassstutzen der Ventilvorrichtung verhindert und eine Unempfindlichkeit bei Pulsationen erreicht.

Weitere Schubumluftventile mit einem solchen Druckausgleich sind aus der US 2007/0051105 A1. Der US 2010/0206388 A1 und der WO 2018/114644 A1 bekannt. Diese weisen sich zum Ventilsitz erstreckende Vorsprünge auf. Ein umlaufender Schutz einer Anströmung oder der Durchgangsöffnungen von radial außen wird nicht offenbart.

Kühlmittelabsperrventile mit einem derartigen Druckausgleich sind bislang nicht bekannt. Ein Grund hierfür ist auch, dass ein mit Verunreinigungen wie beispielsweise Partikeln, beladener Medienstrom, wie ein Kühlmittelstrom bei derartigen Ventilen durch die Bohrungen des Regelkörpers in den Raum hinter den Bohrungen gelangen kann, wo sich die Verunreinigungen ablagern können. Schreitet ein solcher Prozess voran, können sowohl die Bohrungen verstopfen und die Druckausgleichsfunktion des Regelkörpers versagen als auch eine Schwergängigkeit des Ventils folgen, wenn sich Partikel im Gleitbereich zwischen der Führungshülse und den beweglichen Ventilteilen absetzen oder der Raum zu stark mit Partikeln gefüllt wird.

So wird in der DE 10 2016 112 409 A1 ein axial durchströmbares Kühlmittelventil vorgeschlagen, bei dem aufgrund der Partikelbelastung des Kühlmittelstroms am Auslassstutzen eine Axialnut ausgebildet ist, die zum Gehäuse offen ausgebildet ist, um eine Schmutztasche zu bilden, in der sich die Schmutzstoffe aus dem Kühlmittel sammeln können. Durch eine derartig angeordnete Axialnut kann jedoch eine Fehlfunktion der Druckausgleichsbohrungen nicht verhindert werden.

Bei den bekannten Ausführungen besteht entsprechend Nachteil, dass ein Absetzen von Verunreinigungen in den Durchgangsbohrungen oder im Raum hinter dem Regelkörper nicht zuverlässig reduziert werden kann. Hierdurch ist die Druckausgleichsfunktion und korrekte Funktionsfähigkeit des Regelkörpers gefährdet.

Es stellt sich daher die Aufgabe, ein robustes und kostengünstiges Kühlmittelventil zu schaffen, dessen Funktionsfähigkeit, insbesondere die Druckausgleichsfunktion und Beweglichkeit des Regelkörpers zuverlässig aufrechterhalten wird.

Diese Aufgabe wird durch eine Ventilvorrichtung mit den Merkmalen des Hauptanspruchs 1 gelöst.

Dadurch, dass der Regelkörper einen ersten ringförmigen Vorsprung aufweist, der sich axial in Richtung des Ventilsitzes erstreckt und mit dem der Regelkörper auf den Ventilsitz aufsetzbar ist und am Regelkörper eine sich in Umfangsrichtung erstreckende Axialnut ausgebildet ist, die nach außen durch den ersten ringförmigen Vorsprung und nach radial innen durch eine Wand radial zwischen dem ersten ringförmigen Vorsprung und den Durchgangsbohrungen begrenzt ist, wird ein Einströmen von Verunreinigungen im Kühlmittel in die Durchgangsbohrungen und damit in den Raum an der zum Einlass entgegengesetzten Seite des Regelkörpers deutlich reduziert. Die Axialnut wirkt dabei als Schmutzfänger, der verhindert, dass die Schmutzpartikel von radial außerhalb der Durchgangsbohrungen in Richtung der Durchgangsbohrungen strömen. Durch diese Anordnung gelangen deutlich weniger Partikel in den Raum hinter dem Regelkörper und damit in den Gleitbereich des Ankers, so dass die Funktionalität des Ventils über einen längeren Zeitraum sichergestellt wird.

Am Regelkörper ist an der zum Einlass weisenden Seite des Regelkörpers ein Partikelschutzschirm ausgebildet, wobei eine Projektionsfläche des Partikelschutzschirms in Axialrichtung auf den Regelkörper zum Partikelschutzschirm weisende Enden der Durchgangsbohrungen im Regelkörper zumindest teilweise überdeckt. Vorzugsweise weist die die Axialnut nach radial innen begrenzende Wand einen größeren Durchmesser auf als der Partikelschutzschirm. Durch diesen Partikelschutzschirm wird die in den Raum, der an der zum Einlass entgegengesetzten Seite des Regelkörpers im Gehäuse ausgebildet ist, einströmende Partikelmenge deutlich reduziert, da ein gerades Einströmen durch die Durchströmungsöffnungen weitestgehend verhindert wird. Entsprechend wird der benötigte Strömungswiderstand für die Partikel, um an die Rückseite des Regelkörpers zu gelangen, deutlich erhöht. Entsprechend wird die Funktionsfähigkeit des Kühlmittelventils noch länger aufrechterhalten.

Vorzugsweise ist die Wand durch einen zweiten ringförmigen Vorsprung gebildet, der radial innerhalb des ersten ringförmigen Vorsprungs ausgebildet ist und die Axialnut ringförmig zwischen dem ersten ringförmigen Vorsprung und dem zweiten ringförmigen Vorsprung ausgebildet ist. Entsprechend erstreckt die Wand sich über den gesamten Umfang, so dass auch ein Ausströmen der Partikel aus der Axialnut in Umfangsrichtung ausgeschlossen wird, denn diese Partikel könnten andernfalls gegebenenfalls erneut in Richtung der Durchgangsbohrungen umgelenkt werden. Durch diese Ausführung findet in der Axialnut immer eine Hauptströmung statt, die von den Durchgangsbohrungen weg gerichtet ist. Entsprechend kann die in den Raum gelangende Partikelmenge zusätzlich reduziert werden.

Besonders vorteilhaft ist es, wenn der zweite ringförmige Vorsprung konzentrisch zum ersten ringförmigen Vorsprung angeordnet ist, da auf diese Weise durch die Form verursachte Druckunterschiede in der Axialnut vermieden werden, die zu ungewollten Strömungen in Richtung der Durchgangsbohrungen führen könnten.

In einer bevorzugten Ausführungsform erstreckt sich die die Axialnut begrenzende Wand axial. Hierdurch wird sichergestellt, dass die Hauptströmung aus der Axialnut keine Komponente in Richtung der Durchgangsbohrungen aufweist und somit der Partikelstrom zur Regelkörperrückseite reduziert wird.

In einer weiteren bevorzugten Ausbildung der Erfindung ist der Einlass durch einen axialen Einlassstutzen gebildet, dessen Innendurchmesser größer oder gleich einem Innendurchmesser des zweiten ringförmigen Vorsprungs ist und der konzentrisch zum zweiten ringförmigen Vorsprung angeordnet ist. Beim Öffnen des Ventils entsteht ein Druckabfall zwischen dem ersten ringförmigen Vorsprung und Ventilsitz, wodurch eine Strömung in diesen Spalt verursacht wird. Die entstehende Strömung wird durch die Anordnung des zweiten ringförmigen Vorsprungs im weiter innen liegenden Bereich nicht beeinflusst, da dieser nicht im Strömungsweg liegt oder sogar ein Druckgefälle am zweiten ringförmigen Vorsprung gebildet wird. Somit wird eine Strömung im radial inneren Bereich des zweiten ringförmigen Vorsprungs und damit ein Einströmen in die Durchgangsbohrungen weitestgehend vermieden.

Ein solcher Aufbau eines Druckabfalls am zweiten ringförmigen Vorsprung wird auch dadurch verhindert, dass im geschlossenen Zustand des Kühlmittelventils, in dem der Regelkörper mit seinem ersten ringförmigen Vorsprung auf dem Ventilsitz aufliegt, die die Axialnut nach radial innen begrenzende Wand einen axialen Abstand zum Ventilsitz aufweist beziehungsweise dadurch, dass die axiale Erstreckung der die Axialnut nach radial innen begrenzenden Wand kleiner ist als die axiale Erstreckung des ersten ringförmigen Vorsprungs. Entsprechend wird eine Beeinflussung der Abströmung durch den Spalt zwischen Ventilsitz und Regelkörper auch dann vermieden, wenn der zweite ringförmige Vorsprung relativ weit radial außen angesetzt wird.

In einer weiterführenden Ausführungsform überdeckt die Projektionsfläche des Partikelschutzschirms in Axialrichtung auf die zum Partikelschutzschirm weisenden Enden der Durchgangsbohrungen im Regelkörper zumindest 90% der Enden der Durchgangsbohrungen, wobei ein Einströmspalt als fluidische Verbindung des Einlasses zu den Durchgangsbohrungen radial zwischen dem Partikelschutzschirm und der die Axialnut nach radial innen begrenzenden Wand ausgebildet ist. Eine solche Überdeckung erzeugt eine beinahe zwangsweise Umlenkung, wenn ein Partikel vom Einlass zur Rückseite des Regelkörpers in den Raum strömen soll. Entsprechend wird eine deutliche Reduktion der in den Raum gelangenden Partikel erzielt.

Vorzugsweise weist der Partikelschutzschirm eine rotationssymmetrische Anströmfläche auf, welche sich in der axialen Ausdehnung stetig vom Zentrum nach radial außen reduziert. Es wird entsprechend eine Umlenkung der Strömung entlang der Fläche von der Mitte nach radial außen erzeugt, so dass die Strömung zum Auslass geleitet wird. Auf diese Weise wird der Druckabfall verringert und eine direkte Anströmung der Durchgangsbohrungen reduziert.

Dabei erstreckt sich die Anströmfläche des Partikelschutzschirms vom Zentrum nach radial außen konkav, so dass die axiale Anströmung allmählich in eine radiale Abströmung umgewandelt wird und somit die axiale Einströmung in die Durchgangsbohrungen reduziert wird. Entsprechend gelangen insbesondere schwerere Schmutzpartikel nicht an die Regelkörperrückseite.

Vorzugsweise ragt eine Tangente an eine radiale Außenkante der Anströmfläche des Partikelschutzschirms im geöffneten Zustand des Kühlmittelventils, in dem der Regelkörper vom Ventilsitz abgehoben ist, zwischen den Ventilsitz und den ersten ringförmigen Vorsprung, wodurch die Partikel in den Spalt zwischen Ventilsitz und Regelkörper gleitet werden und somit an der Axialnut vorbeigeleitet werden. Zum Einströmen in die Durchgangsbohrungen muss entsprechend eine 90°Umlenkung erfolgen.

Des Weiteren ist es vorteilhaft, wenn der Aktor ein elektromagnetischer Aktor mit einem Anker ist, der mit dem Regelkörper eine Bewegungseinheit bildet, die im geschlossenen Zustand des Kühlmittelventils auf der dem Einlass zugewandten Seite die gleiche in Axialrichtung druckwirksame Fläche aufweist wie auf der dem Einlass abgewandten Seite der Bewegungseinheit. Entsprechend findet nicht nur ein Druckausgleich über die Durchgangsbohrungen an der Bewegungseinheit statt, sondern auch ein Kraftausgleich, so dass auf die Bewegungseinheit nur die Kraft des Aktors wirkt. Erin derartiges Ventil ist gegen Druckschwankungen unempfindlich und mit exakten Betätigungskräften bewegbar, so dass ein relativ kleiner Aktor verwendet werden kann.

Es wird somit ein robustes Kühlmittelventil geschaffen, das einfach und kostengünstig zu fertigen ist und dabei unempfindlich gegenüber im Kühlmittel vorhandene Schmutzstoffe und Partikel ist. Entsprechend wird die Funktionsfähigkeit des Kühlmittelventils über einen langen Zeitraum zuverlässig aufrechterhalten, da ein Einströmen der Partikel in die Durchgangsbohrungen und damit zu der vom Einlass abgewandten Seite des Regelkörpers weitestgehend vermeiden wird. Somit gelangen wenige Partikel in den Gleitbereich zwischen Anker und Gleitbuchse. Zusätzlich wird die Druckausgleichsfunktion und somit zuverlässige Schaltbarkeit des Kühlmittelventils auch bei Druckschwankungen aufrechterhalten, indem die Durchgangsbohrungen des Regelkörpers vor Verstopfung bewahrt werden.

Ein Ausführungsbeispiel eines erfindungsgemäßen Kühlmittelventils ist in den Figuren dargestellt und wird nachfolgend beschrieben.

Figur 1 zeigt eine Seitenansicht eines erfindungsgemäßen Kühlmittelventils in geschnittener Darstellung.

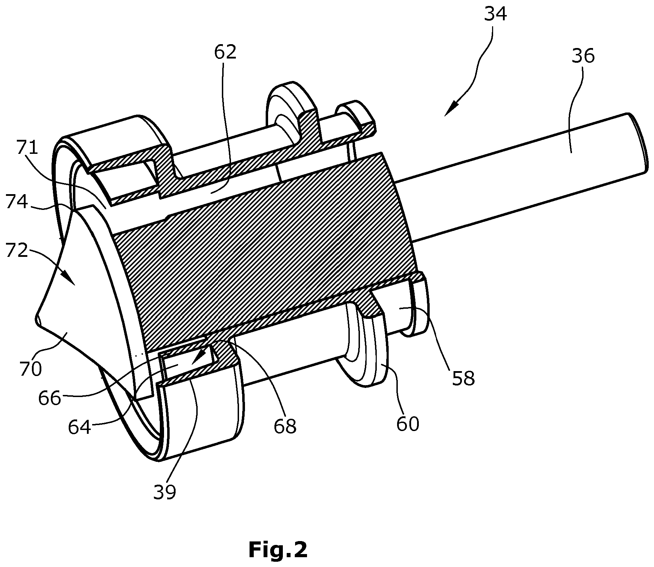

Figur 2 zeigt eine perspektivische Ansicht eines Regelkörpers des erfindungsgemäßen Kühlmittelventils aus Figur 1 in geschnittener Darstellung.

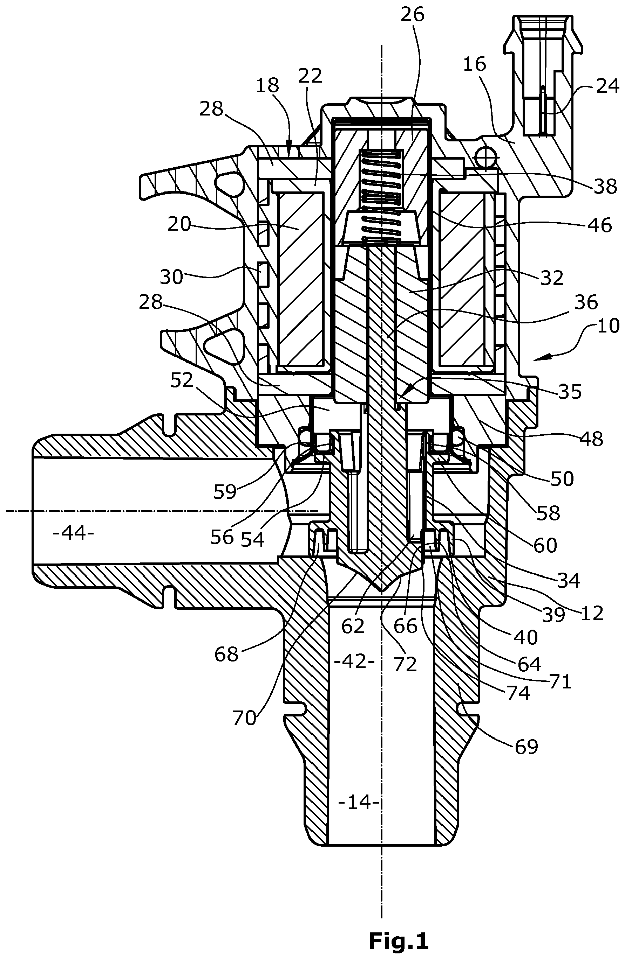

Das in Figur 1 dargestellte Kühlmittelventil besteht aus einem Gehäuse 10, welches zweiteilig ausgeführt ist und ein Strömungsgehäuse 12 mit einem darin ausgebildeten Strömungskanal 14 und ein am Strömungsgehäuse 12 befestigtes Aktorgehäuse 16 aufweist, in dem ein elektromagnetischer Aktor 18 angeordnet ist.

Der elektromagnetische Aktor 18 weist einen elektromagnetischen Kreis auf, der aus einer Spule 20, die auf einen Spulenträger 22 gewickelt ist und über einen Stecker 24 bestrombar ist, sowie einem magnetisierbaren Kern 26, Rückschusselementen 28, einem Joch 30 und einem beweglichen Anker 32 besteht. Bei Bestromung der Spule 20 wird der Anker 32 in bekannter Weise durch die entstehenden magnetischen Kräfte in Richtung des Kerns 26 bewegt.

Der Anker 32 bildet mit einem Regelkörper 34 eine Bewegungseinheit 35, indem der Anker 32 mit dem Regelkörper 34 über ein Koppelglied 36 verbunden wird, welches einteilig mit dem Regelkörper 34 ausgebildet ist und sich in eine Bohrung des Ankers 32 erstreckt und in der Bohrung am Anker 32 befestigt ist. Über eine Feder 38 wird die Bewegungseinheit 35 in einer vom Kern 26 weg weisenden Richtung belastet, wodurch der Regelkörper 34 mit einem radial äußeren und axial zum Ventilsitz ragenden ersten ringförmigen Vorsprung 39 auf einen Ventilsitz 40 gedrückt wird, der im Strömungsgehäuse 12 zwischen einem axialen Einlass 42 und einem radialen Auslass 44 ausgebildet ist, so dass ein Durchströmungsquerschnitt des Strömungskanals 14 verschlossen wird. Bei Bestromung der Spule 20 übersteigt die magnetische Kraft die Kraft der Feder 38, wodurch der erste ringförmige Vorsprung 39 des Regelkörpers 34 vom Ventilsitz 40 abgehoben wird und somit den Durchströmungsquerschnitt freigibt.

Der Anker 32 ist in einer Hülse 46 geführt, in der auch der Kern 26 befestigt ist und die sich radial im Innern des Aktors 18 bis in einen Gehäusevorsprung 48 des Aktorgehäuses 16 erstreckt, der sich axial in das Strömungsgehäuse 12 erstreckt. Zwischen diesem Gehäusevorsprung 48 und einem Endbereich der Hülse 46 ist ein O-Ring 50 angeordnet, über den der radial äußere Bereich der Hülse 46 gegenüber dem geförderten Kühlmittel abgedichtet wird, so dass kein Kühlmittel zur Spule 20 gelangen kann.

Des Weiteren begrenzt die Hülse 46 einen Raum 52, der an einer vom Einlass 42 abgewandten Seite des Regelkörpers 34 beziehungsweise der Bewegungseinheit 35 gebildet wird und der gegenüber dem Auslass 44 mittels eines Lippendichtringes 54, dessen geschlossene Seite zum Auslass 44 weist, abgedichtet wird. Der Lippendichtring 54 wird mit dem Regelkörper 34 bewegt und ist über seinen inneren Schenkel 56 in einer Radialnut 58 des Regelkörpers 34 befestigt und liegt mit seinem äußeren Schenkel 59 gegen die Hülse 46 an. Axial liegt der Lippendichtring 54 mit seiner geschlossenen Seite auf einer Auflagefläche 60 des Regelkörpers 34 auf, die als umlaufender radialer Vorsprung am Regelkörper 34 ausgebildet ist.

Der Raum 52 ist über im Regelkörper 34 ausgebildete Durchgangsbohrungen 62 kontinuierlich mit dem Einlass 42 verbunden, wodurch die Bewegungseinheit 35 druckausgeglichen ist. Da zusätzlich die Fläche an der vom Einlass 42 entfernten Seite, auf die der Druck wirkt, auch der Fläche des Regelkörpers 34 radial innerhalb des ersten ringförmigen Vorsprungs 39 entspricht, besteht auch ein Kräftegleichgewicht bezüglich der hydraulischen Kräfte. Entsprechend ist der Regelkörper 34 ausschließlich in Abhängigkeit der Federkraft und der elektromagnetischen Kraft bewegbar.

Um dieses Kräftegleichgewicht aufrechtzuerhalten und auch Verschmutzungen zwischen der Hülse 46 und dem Anker 32 oder dem Regelkörper 34 zu verhindern, ist am Regelkörper 34 eine Wand 64 ausgebildet, die im vorliegenden Ausführungsbeispiel als zweiter sich axial erstreckender ringförmiger Vorsprung 66 ausgebildet ist, der konzentrisch innerhalb des ersten ringförmigen Vorsprungs 39 ausgebildet ist, so dass zwischen den beiden sich axial erstreckenden ringförmigen Vorsprüngen 39, 66 eine Axialnut 68 ausgebildet wird, die sich in Umfangsrichtung erstreckt und im vorliegenden Ausführungsbeispiel ebenfalls ringförmig ist. Die axiale Höhe des zweiten ringförmigen Vorsprungs 66 ist dabei geringfügig kleiner als die des ersten ringförmigen Vorsprungs 39, so dass ein Aufsetzen des zweiten ringförmigen Vorsprungs 66 am Ventilsitz 40 verhindert wird. Der Durchmesser des zweiten ringförmigen Vorsprungs 66 entspricht im vorliegenden Ausführungsbeispiel im Wesentlichen dem Innendurchmesser eines den Einlass 42 bildenden Einlassstutzens 69, kann jedoch auch kleiner ausgeführt werden.

Die Verbindung des Einlasses 42 mit dem Raum 52 erfolgt jedoch nicht vollständig axial über die Durchgangsbohrungen 62, da die Enden der Durchgangsbohrungen 62 größtenteils durch einen Partikelschutzschirm 70 in axialer Richtung betrachtet verdeckt sind, der zentral am zum Einlass 42 weisenden Ende des Regelkörpers 34 ausgebildet ist. Die Einströmung in die Durchgangsbohrungen 62 muss entsprechend durch einen Einströmspalt 71 zunächst zwischen dem Partikelschutzschirm 70 und der Wand 64 beziehungsweise dem zweiten ringförmigen Vorsprung 66, dessen Durchmesser geringfügig größer ist als der des Partikelschutzschirms 70. Von hier aus muss zur Durchströmung der Durchgangsbohrungen 62 eine Umlenkung der Strömung nach radial innen in die Durchgangsbohrungen 62 erfolgen und von hier aus axial in den Raum 52. Da jedoch der Partikelschutzschirm 70 eine rotationssymmetrische Anströmfläche 72 aufweist, welche sich in der axialen Ausdehnung stetig vom Zentrum nach radial außen konkav reduziert, so dass eine Hauptströmung bei geöffnetem Kühlmittelventil über eine radiale Außenkante 74 der Anströmfläche 72 des Partikelschutzschirms 70 zwischen den Ventilsitz 40 und den ersten ringförmigen Vorsprung 39 weist, wird der Hauptteil der Strömung und damit insbesondere die trägen Partikel größtenteils an den Durchgangsbohrungen 62 vorbei zum Auslass 44 geleitet.

Die nicht zum Auslass 44 gelangenden Partikel die von radial innen auf den ersten ringförmigen Vorsprung 39 treffen, werden innerhalb der Axialnut 68, in einer Art Wirbelströmung umgelenkt und treffen auf die Wand 64, durch die sie erneut von den Durchgangbohrungen 62 weg in Richtung des Einlasses 42 und des Auslasses 44 umgelenkt werden. Da das Druckgefälle den Kühlmittelstrom nach radial außen zum Auslass 44 treibt und die Wand 46 radial innerhalb der Ausdehnung des Einlassstutzens 69 angeordnet ist, entsteht somit beinahe keine Strömung der schwereren Partikel in Richtung des Raums 52. Auf diese Weise wird sowohl zuverlässig ein Verstopfen der Durchgangsbohrungen 62 verhindert als auch ein Absetzen der Partikel zwischen der Hülse 46 und der Bewegungseinheit 35, was zu einer Schwergängigkeit des Ventils führen würde.

Die erfindungsgemäße Ventilvorrichtung ist kostengünstig in der Herstellung und robust im Betrieb. Sie erhält die Druckausgleichsfunktion des Regelkörpers aufrecht, indem das Eindringen von Verunreinigungen in den Regelkörper deutlich reduziert wird, wodurch funktionsrelevante Teile nicht weiter durch die Verunreinigungen belastet werden. Entsprechend wird die Lebensdauer des Kühlmittelventils erhöht.

Es sollte deutlich sein, dass der Schutzbereich des vorliegenden Hauptanspruchs nicht auf das beschriebene Ausführungsbeispiel beschränkt ist. Beispielsweise kann die Kopplung zwischen dem Anker und dem Regelkörper anders ausgeführt sein oder der Regelkörper mehrteilig ausgeführt werden. Insbesondere kann statt des durchgängigen ringförmigen Vorsprungs auch eine Abschirmung durch die Wand nur gegenüberliegend zu den Durchgangsbohrungen erfolgen, so dass mehrere Axialnuten über den Umfang verteilt angeordnet werden.

## Patentansprüche

1. Kühlmittelventil für ein Kraftfahrzeug mit
einem Gehäuse (10), das einen axialen Einlass (42) und einen radialen Auslass (44) aufweist,
einem Durchströmungsquerschnitt, der zwischen dem Einlass (42) und dem Auslass (44) ausgebildet ist und von einem Ventilsitz (40) umgeben ist,
einem Regelkörper (34), der mittels eines Aktors (18) auf den Ventilsitz (40) absetzbar und vom Ventilsitz (40) abhebbar ist,
Durchgangsbohrungen (62) im Regelkörper (34), über die der Einlass (42) stetig mit einem Raum (52) an der dem Einlass (42) abgewandten Seite des Regelkörpers (34) verbunden ist, wobei
der Regelkörper (34) einen ersten ringförmigen Vorsprung (39) aufweist, der sich axial in Richtung des Ventilsitzes (40) erstreckt und mit dem der Regelkörper (34) auf den Ventilsitz (40) aufsetzbar ist am Regelkörper (34) eine sich in Umfangsrichtung erstreckende Axialnut (68) ausgebildet ist, die nach außen durch den ersten ringförmigen Vorsprung (39) und nach radial innen durch eine Wand (64) radial zwischen dem ersten ringförmigen Vorsprung (39) und den Durchgangsbohrungen (62) begrenzt ist, wobei am Regelkörper (34) an der zum Einlass (42) weisenden Seite des Regelkörpers (34) ein Partikelschutzschirm (70) ausgebildet ist,
**dadurch gekennzeichnet, dass**
eine Projektionsfläche des Partikelschutzschirms (70) in Axialrichtung auf den Regelkörper (34) zum Partikelschutzschirm (70) weisende Enden der Durchgangsbohrungen (62) im Regelkörper (34) zumindest teilweise überdeckt, und
die die Axialnut (68) nach radial innen begrenzende Wand (64) einen größeren Durchmesser aufweist als der Partikelschutzschirm (70).

2. Kühlmittelventil für ein Kraftfahrzeug nach Anspruch 1,
**dadurch gekennzeichnet, dass**
die Wand (64) durch einen zweiten ringförmigen Vorsprung (66) gebildet ist, der radial innerhalb des ersten ringförmigen Vorsprungs (39) ausgebildet ist und die Axialnut (68) ringförmig zwischen dem ersten ringförmigen Vorsprung (39) und dem zweiten ringförmigen Vorsprung (66) ausgebildet ist.

3. Kühlmittelventil für ein Kraftfahrzeug nach Anspruch 2,
**dadurch gekennzeichnet, dass**
der zweite ringförmige Vorsprung (66) konzentrisch zum ersten ringförmigen Vorsprung (39) angeordnet ist.

4. Kühlmittelventil für ein Kraftfahrzeug nach einem der vorhergehenden Ansprüche,
**dadurch gekennzeichnet, dass**
sich die die Axialnut (68) begrenzende Wand (64) axial erstreckt.

5. Kühlmittelventil für ein Kraftfahrzeug nach einem der Ansprüche 2 bis 4,
**dadurch gekennzeichnet, dass**
der Einlass (42) durch einen axialen Einlassstutzen (69) gebildet ist, dessen Innendurchmesser größer oder gleich einem Innendurchmesser des zweiten ringförmigen Vorsprungs (66) ist und der konzentrisch zum zweiten ringförmigen Vorsprung (66) angeordnet ist.

6. Kühlmittelventil für ein Kraftfahrzeug nach einem der vorhergehenden Ansprüche,
**dadurch gekennzeichnet, dass**
im geschlossenen Zustand des Kühlmittelventils, in dem der Regelkörper (34) mit seinem ersten ringförmigen Vorsprung (39) auf dem Ventilsitz (40) aufliegt, die die Axialnut (68) nach radial innen begrenzende Wand (64) einen axialen Abstand zum Ventilsitz (40) aufweist.

7. Kühlmittelventil für ein Kraftfahrzeug nach einem der vorangegangenen Ansprüche,
**dadurch gekennzeichnet, dass**
die axiale Erstreckung der die Axialnut (68) nach radial innen begrenzenden Wand (64) kleiner ist als die axiale Erstreckung des ersten ringförmigen Vorsprungs (39).

8. Kühlmittelventil für ein Kraftfahrzeug nach einem der vorangegangenen Ansprüche,
**dadurch gekennzeichnet, dass**
die Projektionsfläche des Partikelschutzschirms (70) in Axialrichtung auf die zum Partikelschutzschirm (70) weisenden Enden der Durchgangsbohrungen (62) im Regelkörper (34) zumindest 90% der Enden der Durchgangsbohrungen (62) überdeckt, wobei ein Einströmspalt (71) als fluidische Verbindung des Einlasses (42) zu den Durchgangsbohrungen (62) radial zwischen dem Partikelschutzschirm (70) und der die Axialnut (68) nach radial innen begrenzenden Wand (64) ausgebildet ist.

9. Kühlmittelventil für ein Kraftfahrzeug nach Anspruch 7 oder 8,
**dadurch gekennzeichnet, dass**
der Partikelschutzschirm (70) eine rotationssymmetrische Anströmfläche (72) aufweist, welche sich in der axialen Ausdehnung stetig vom Zentrum nach radial außen reduziert.

10. Kühlmittelventil für ein Kraftfahrzeug nach einem der Ansprüche 8 bis 9,
**dadurch gekennzeichnet, dass**
die Anströmfläche (72) des Partikelschutzschirms (70) sich vom Zentrum nach radial außen konkav erstreckt.

11. Kühlmittelventil für ein Kraftfahrzeug nach einem der Ansprüche 8 bis 10,
**dadurch gekennzeichnet, dass**
eine Tangente an eine radiale Außenkante (74) der Anströmfläche (72) des Partikelschutzschirms (70) im geöffneten Zustand des Kühlmittelventils, in dem der Regelkörper (34) vom Ventilsitz (40) abgehoben ist, zwischen den Ventilsitz (40) und den ersten ringförmigen Vorsprung (39) ragt.

12. Kühlmittelventil für ein Kraftfahrzeug nach einem der vorangegangenen Ansprüche,
**dadurch gekennzeichnet, dass**
der Aktor (18) ein elektromagnetischer Aktor mit einem Anker (32) ist, der mit dem Regelkörper (34) eine Bewegungseinheit (35) bildet, die im geschlossenen Zustand des Kühlmittelventils auf der dem Einlass (42) zugewandten Seite die gleiche in Axialrichtung druckwirksame Fläche aufweist wie auf der dem Einlass (42) abgewandten Seite der Bewegungseinheit (35).

## Claims

1. A coolant valve for a motor vehicle, having
a housing (10) which has an axial inlet (42) and a radial outlet (44),
a flow cross-section which is formed between the inlet (42) and the outlet (44) and is surrounded by a valve seat (40),
a control body (34) which can be placed onto the valve seat (40) and lifted off the valve seat (40) by means of an actuator (18),
through-bores (62) in the control body (34), via which the inlet (42) is continuously connected to a space (52) at the side of the control body (34) facing away from the inlet (42), wherein
the control body (34) has a first annular projection (39) which extends axially in the direction of the valve seat (40) and by which the control body (34) can be placed onto the valve seat (40), on the control body (34) there is formed an axial groove (68) extending in the circumferential direction and which is delimited to the outside by the first annular projection (39) and radially inwards by a wall (64) radially between the first annular projection (39) and the through-bores (62), wherein
a particle protection shield (70) is formed on the control body (34) at the side of the control body (34) facing the inlet (42),
**characterized in that**
a projection surface of the particle protection shield (70) in the axial direction onto the control body (34) at least partially covers ends of the through-bores (62) in the control body (34) pointing to the particle projection shield (70), and
the wall (64) delimiting the axial groove (68) radially inwards has a larger diameter than the particle protection shield (70).

2. The coolant valve for a motor vehicle according to Claim 1,
**characterized in that**
the wall (64) is formed by a second annular projection (66) which is formed radially inside the first annular projection (39), and the axial groove (68) is formed annularly between the first annular projection (39) and the second annular projection (66).

3. The coolant valve for a motor vehicle according to Claim 2,
**characterized in that**
the second annular projection (66) is arranged concentrically to the first annular projection (39).

4. The coolant valve for a motor vehicle according to one of the preceding claims,
**characterized in that**
the wall (64) delimiting the axial groove (68) extends axially.

5. The coolant valve for a motor vehicle according to one of Claims 2 to 4,
**characterized in that**
the inlet (42) is formed by an axial inlet nozzle (69), the inner diameter of which is greater than or equal to an inner diameter of the second annular projection (66) and which is arranged concentrically to the second annular projection (66).

6. The coolant valve for a motor vehicle according to one of the preceding claims,
**characterized in that**
in the closed state of the coolant valve, in which the control body (34) rests with its first annular projection (39) on the valve seat (40), the wall (64) delimiting the axial groove (68) radially inwards has an axial distance from the valve seat (40).

7. The coolant valve for a motor vehicle according to one of the preceding claims,
**characterized in that**
the axial extent of the wall (64) delimiting the axial groove (68) radially inwards is smaller than the axial extent of the first annular projection (39).

8. The coolant valve for a motor vehicle according to one of the preceding claims,
**characterized in that**
the projection surface of the particle protection shield (70) in the axial direction onto the ends of the through-bores (62) in the control body (34) pointing to the particle protection shield (70) covers at least 90 % of the ends of the through-bores (62), wherein an inflow gap (71) is formed as a fluidic connection of the inlet (42) to the through-bores (62) radially between the particle protection shield (70) and the wall (64) delimiting the axial groove (68) radially inwards.

9. The coolant valve for a motor vehicle according to Claim 7 or 8,
**characterized in that**
the particle protection shield (70) has a rotationally symmetrical inflow surface (72) which, in the axial extent, continuously reduces radially outwards from the centre.

10. The coolant valve for a motor vehicle according to one of Claims 8 to 9,
**characterized in that**
the inflow surface (72) of the particle protection shield (70) extends concavely radially outward from the centre.

11. The coolant valve for a motor vehicle according to one of Claims 8 to 10,
**characterized in that**
a tangent to a radial outer edge (74) of the inflow surface (72) of the particle protection shield (70) in the open state of the coolant valve, in which the control body (34) is lifted from the valve seat (40), projects between the valve seat (40) and the first annular projection (39).

12. The coolant valve for a motor vehicle according to one of the preceding claims,
**characterized in that**
the actuator (18) is an electromagnetic actuator with an armature (32) which forms with the control body (34) a movement unit (35) which, in the closed state of the coolant valve on the side facing the inlet (42), has the same surface which is pressure-effective in the axial direction as on the side of the movement unit (35) facing away from the inlet (42).

## Revendications

1. Vanne de liquide de refroidissement pour un véhicule à moteur avec
un boîtier (10), qui présente une entrée (42) axiale et une sortie (44) radiale,
une section transversale d'écoulement qui est réalisée entre l'entrée (42) et la sortie (44) et est entourée d'un siège de vanne (40),
un corps de régulation (34) qui peut être déposé sur le siège de vanne (40) et soulevé du siège de vanne (40) au moyen d'un actionneur (18),
des alésages de passage (62) dans le corps de régulation (34), par lesquels l'entrée (42) est reliée de manière continue à un espace (52) sur le côté opposé à l'entrée (42) du corps de régulation (34), dans laquelle
le corps de régulation (34) présente une première saillie annulaire (39) qui s'étend axialement en direction du siège de vanne (40) et avec laquelle le corps de régulation (34) peut être placé sur le siège de vanne (40), une rainure axiale (68) s'étendant dans la direction circonférentielle, qui est délimitée radialement vers l'extérieur par la première saillie annulaire (39) et radialement vers l'intérieur par une paroi (64), est réalisée sur le corps de régulation (34) radialement entre la première saillie annulaire (39) et les alésages de passage (62), dans laquelle un écran de protection contre les particules (70) est réalisé sur le corps de régulation (34) sur le côté orienté vers l'entrée (42) du corps de régulation (34),
**caractérisée en ce que**
une surface de projection de l'écran de protection contre les particules (70) recouvre au moins partiellement, dans la direction axiale du corps de régulation (34), les extrémités orientées vers l'écran de protection contre les particules (70) des alésages de passage (62) dans le corps de régulation (34), et
la paroi (64) délimitant la rainure axiale (68) radialement vers l'intérieur présente un diamètre supérieur à celui de l'écran de protection contre les particules (70).

2. Vanne de liquide de refroidissement pour un véhicule à moteur selon la revendication 1,
**caractérisée en ce que**
la paroi (64) est formée par une seconde saillie annulaire (66) qui est réalisée radialement à l'intérieur de la première saillie annulaire (39) et la rainure axiale (68) est réalisée annulairement entre la première saillie annulaire (39) et la seconde saillie annulaire (66).

3. Vanne de liquide de refroidissement pour un véhicule à moteur selon la revendication 2,
**caractérisée en ce que**
la seconde saillie annulaire (66) est disposée de manière concentrique par rapport à la première saillie annulaire (39).

4. Vanne de liquide de refroidissement pour un véhicule à moteur selon l'une quelconque des revendications précédentes,
**caractérisée en ce que**
la paroi (64) délimitant la rainure axiale (68) s'étend axialement.

5. Vanne de liquide de refroidissement pour un véhicule à moteur selon l'une quelconque des revendications 2 à 4,
**caractérisée en ce que**
l'entrée (42) est formée par une tubulure d'entrée axiale (69) dont le diamètre intérieur est supérieur ou égal à un diamètre intérieur de la seconde saillie annulaire (66) et qui est disposée de manière concentrique par rapport à la seconde saillie annulaire (66).

6. Vanne de liquide de refroidissement pour un véhicule à moteur selon l'une quelconque des revendications précédentes,
**caractérisée en ce que**
à l'état fermé de la vanne de liquide de refroidissement, dans lequel le corps de régulation (34) repose avec sa première saillie annulaire (39) sur le siège de vanne (40), la paroi (64) délimitant la rainure axiale (68) radialement vers l'intérieur présente une distance axiale par rapport au siège de vanne (40).

7. Vanne de liquide de refroidissement pour un véhicule à moteur selon l'une quelconque des revendications précédentes,
**caractérisée en ce que**
l'étendue axiale de la paroi (64) délimitant la rainure axiale (68) radialement vers l'intérieur est inférieure à l'étendue axiale de la première saillie annulaire (39).

8. Vanne de liquide de refroidissement pour un véhicule à moteur selon l'une quelconque des revendications précédentes,
**caractérisée en ce que**
la surface de projection de l'écran de protection contre les particules (70) recouvre, dans la direction axiale des extrémités orientées vers l'écran de protection contre les particules (70) des alésages de passage (62) dans le corps de régulation (34), au moins 90 % des extrémités des alésages de passage (62), dans laquelle une fente d'admission (71) est réalisée comme liaison fluidique de l'entrée (42) aux alésages de passage (62) radialement entre l'écran de protection contre les particules (70) et la paroi (64) délimitant la rainure axiale (68) radialement vers l'intérieur.

9. Vanne de liquide de refroidissement pour un véhicule à moteur selon la revendication 7 ou 8,
**caractérisée en ce que**
l'écran de protection contre les particules (70) présente une surface d'arrivée de flux (72) symétrique en rotation qui se réduit progressivement dans l'extension axiale à partir du centre radialement vers l'extérieur.

10. Vanne de liquide refroidissement pour un véhicule à moteur selon l'une quelconque des revendications 8 à 9,
**caractérisée en ce que**
la surface d'arrivée de flux (72) de l'écran de protection contre les particules (70) s'étend à partir du centre radialement vers l'extérieur de manière concave.

11. Vanne de liquide de refroidissement pour un véhicule à moteur selon l'une quelconque des revendications 8 à 10,
**caractérisée en ce que**
une tangente à un bord extérieur radial (74) de la surface d'arrivée de flux (72) de l'écran de protection contre les particules (70) à l'état ouvert de la vanne de liquide de refroidissement, dans lequel le corps de régulation (34) est soulevé du siège de vanne (40), dépasse entre le siège de vanne (40) et la première saillie annulaire (39).

12. Vanne de liquide de refroidissement pour un véhicule à moteur selon l'une quelconque des revendications précédentes,
**caractérisée en ce que**
l'actionneur (18) est un actionneur électromagnétique avec un induit (32), qui forme avec le corps de régulation (34) une unité de mouvement (35), qui présente, à l'état fermé de la vanne de liquide de refroidissement, sur le côté orienté vers l'entrée (42), la même surface d'action de pression dans la direction axiale que sur le côté éloigné de l'entrée (42) de l'unité de mouvement (35).
